# EUROPEAN PATENT APPLICATION

(11) **EP 4 576 705 A1**
(43) Date of publication of application: **25.06.2025**
(21) Application number: 23899556.7
(22) Date of filing: 22.09.2023
(51) Int. Cl.: H04L 41/12, H01B 11/22

(54) **OPTICAL SPLITTER, SLAVE GATEWAY, MASTER GATEWAY, AND ELECTRICAL SIGNAL TRANSMISSION METHOD**

(30) Priority: 06.12.2022 CN 202211558136
(71) Applicant: Huawei Technologies Co., Ltd., Shenzhen, Guangdong 518129 (CN)
(72) Inventor: GUO, Shanshan, Shenzhen, Guangdong 518129 (CN); LI, Borui, Shenzhen, Guangdong 518129 (CN); HUANG, Guojia, Shenzhen, Guangdong 518129 (CN)
(74) Representative: Isarpatent
(86) International application number: PCT/CN2023/120734
(87) International publication number: WO 2024/119973

(57) **Abstract**

Embodiments of this application disclose an optical splitter, a slave gateway, a master gateway, and an electrical signal transmission method. The optical splitter is connected to the slave gateway through a photoelectric composite cable. In this way, in addition to normal transmission of an optical signal between the optical splitter and the slave gateway through a fiber in the photoelectric composite cable, the optical splitter and the slave gateway may further exchange an electrical signal through a cable in the photoelectric composite cable. In other words, a new channel for exchanging information is additionally provided between the optical splitter and the slave gateway, without affecting normal transmission of the optical signal, so that the optical splitter learns of a current topology structure in real time based on the information exchanged with the slave gateway, to effectively manage and maintain an FTTR network. In addition, this solution may be implemented based on an existing photoelectric composite cable that has been laid, and there is no need to reconstruct the photoelectric composite cable, to reduce laying costs.

## Description

This application claims priority to Chinese Patent Application No. 202211558136.5, filed with the China National Intellectual Property Administration on December 06, 2022 and entitled "OPTICAL SPLITTER, SLAVE GATEWAY, MASTER GATEWAY, AND ELECTRICAL SIGNAL TRANSMISSION METHOD", which is incorporated herein by reference in its entirety.

### TECHNICAL FIELD

This application relates to the field of FTTR, and in particular, to an optical splitter, a slave gateway, a master gateway, and an electrical signal transmission method.

### BACKGROUND

With the popularization of fixed access broadband and the emergence of various intelligent terminals, to resolve a problem of Wi-Fi coverage of a home network, a fiber to the room (Fiber to the Room, FTTR) technology has been proposed and has attracted wide attention. A main idea of FTTR is to further extend a fiber to a residential room based on fiber to the home (fiber to the home, FTTH). According to a current FTTH network construction mode, the fiber is led into a weak-current information box in a household, and a Wi-Fi access device of a user is installed in the information box. Because the information box is usually located near an entrance door and is far away from a daily activity area of the user, a Wi-Fi signal loss is large. As a result, bandwidth accessed by a user terminal is limited. The main idea of FTTR is to further extend the fiber to the residential room, and install a Wi-Fi access device in the room. This reduces a distance between a user terminal device and the Wi-Fi device, ensures quality of a Wi-Fi signal, and resolves a problem that quality of a signal received by the user terminal device is poor due to unstable Wi-Fi access.

An FTTR network mainly includes a master gateway, at least one optical splitter, and at least one slave gateway. The master gateway is connected to the at least one optical splitter in a cascading manner, and each slave gateway is connected to a branch port of a corresponding optical splitter. At present, a current topology structure is mainly identified manually. Efficiency is low and an error is prone to occur. This is not conducive to manage and maintain the FTTR network.

### SUMMARY

Embodiments of this application provide an optical splitter, a slave gateway, a master gateway, and an electrical signal transmission method. The optical splitter and the slave gateway may further exchange an electrical signal through a cable in a photoelectric composite cable, so that the optical splitter learns of a current topology structure in real time based on information exchanged with the slave gateway, to effectively manage and maintain an FTTR network.

According to a first aspect, an embodiment of this application provides an optical splitter. The optical splitter includes: a control unit, a sending unit, a receiving unit, and N first ports, where the N first ports are respectively connected to N slave gateways through a first photoelectric composite cable, and N is an integer greater than 1. Specifically, the receiving unit is configured to: receive N channels of first electrical signals respectively input from the N first ports, and transmit the N channels of first electrical signals to the control unit, where the N channels of first electrical signals are respectively from the N slave gateways. The control unit is configured to generate a second electrical signal. The sending unit is configured to transmit the second electrical signal to the N first ports, to enable the second electrical signal to be respectively output to the N slave gateways from the N first ports.

In this implementation, the optical splitter is connected to the slave gateway through the photoelectric composite cable. In this way, in addition to normal transmission of an optical signal between the optical splitter and the slave gateway through a fiber in the photoelectric composite cable, the optical splitter and the slave gateway may further exchange an electrical signal through a cable in the photoelectric composite cable. In other words, a new channel for exchanging information is additionally provided between the optical splitter and the slave gateway, without affecting normal transmission of the optical signal, so that the optical splitter learns of a current topology structure in real time based on the information exchanged with the slave gateway, to effectively manage and maintain an FTTR network. In addition, this solution may be implemented based on an existing photoelectric composite cable that has been laid, and there is no need to reconstruct the photoelectric composite cable, to reduce laying costs.

In some possible implementations, the first electrical signal is a differential signal, and/or the second electrical signal is a differential signal. It should be understood that, compared with a single-ended signal, the differential signal has a stronger anti-interference capability, can effectively suppress electromagnetic interference (Electromagnetic Interference, EMI), and has an advantage of accurate timing-based positioning.

In some possible implementations, the optical splitter further includes a power supply, where the power supply is configured to output a supply voltage, and the supply voltage is respectively transmitted to the N slave gateways through the first photoelectric composite cable. In other words, in addition to implementing electrical signal exchanging between the optical splitter and the slave gateway, this solution provided in this application may further be compatible with a case in which the optical splitter supplies power to each slave gateway through the photoelectric composite cable. This has better practical effect.

In some possible implementations, the optical splitter further includes an isolation unit, and the isolation unit is separately connected to the sending unit, the receiving unit, the power supply, and the first port. The isolation unit is configured to: isolate the supply voltage, to prevent the supply voltage from being transmitted to the control unit through the receiving unit; and isolate the first electrical signal and the second electrical signal, to prevent the first electrical signal and the second electrical signal from being transmitted to the power supply. In this implementation, the isolation unit isolates the supply voltage from an exchanged electrical signal, so that there is no interference between power supply and electrical signal transmission.

In some possible implementations, the isolation unit includes a coupling capacitor module and an isolation inductor module. The coupling capacitor module is configured to isolate the supply voltage, to prevent the supply voltage from being transmitted to the control unit through the receiving unit. The isolation inductor module is configured to isolate the first electrical signal and the second electrical signal, to prevent the first electrical signal and the second electrical signal from being transmitted to the power supply. In this implementation, a specific implementation of the isolation unit is provided, to enhance implementability of this solution.

In some possible implementations, each channel of the first electrical signal carries status information of the slave gateway, so that the optical splitter knows a status of each slave gateway connected to the optical splitter.

In some possible implementations, the optical splitter further includes N indicator lights, and the control unit is further configured to respectively control working modes of the N indicator lights based on the status information of the N slave gateways. The working mode of the indicator light is used to reflect the status information of the gateway, to implement visualization of a slave gateway status and facilitate management and maintenance.

In some possible implementations, the control unit is specifically configured to generate the second electrical signal based on the status information of the N slave gateways, where the second electrical signal carries topology information between the optical splitter and the N slave gateways. In other words, the optical splitter may summarize the status information of the slave gateways to generate the topology information, to implement real-time update of the topology information.

In some possible implementations, the optical splitter further includes a first one-of-N switch and a second one-of-N switch, the sending unit is connected to the first one-of-N switch, the receiving unit is connected to the second one-of-N switch, and the control unit is configured to control on/off of the first one-of-N switch and the second one-of-N switch. It should be understood that, use of the one-of-N switch may effectively simplify a structure of the optical splitter, and reduce space occupied by the switch.

In some possible implementations, the optical splitter further includes a second port, the second port is connected to a master gateway or a first optical splitter through a second photoelectric composite cable, and an electrical signal is transmitted between the optical splitter and the master gateway or the first optical splitter through the second photoelectric composite cable. In this implementation, the optical splitter may further transmit the electrical signal with the master gateway or an upper-level cascaded optical splitter through the photoelectric composite cable, to improve scalability of this solution.

In some possible implementations, the optical splitter further includes a third port, the third port is connected to a second optical splitter through a third photoelectric composite cable, and an electrical signal is transmitted between the optical splitter and the second optical splitter through the third photoelectric composite cable. In this implementation, the optical splitter may further transmit the electrical signal with a next-level cascaded optical splitter through the photoelectric composite cable, to improve scalability of this solution.

According to a second aspect, an embodiment of this application provides a slave gateway. The slave gateway includes: a control unit, a sending unit, a receiving unit, and a port, where the port is connected to a branch port of an optical splitter through a photoelectric composite cable. Specifically, the control unit is configured to generate a first electrical signal. The sending unit is configured to transmit the first electrical signal to the port, to enable the first electrical signal to be transmitted to the optical splitter from the port. The receiving unit is configured to: receive a second electrical signal input from the port, and transmit the second electrical signal to the control unit, where the second electrical signal is from the optical splitter.

In some possible implementations, the first electrical signal is a differential signal, and/or the second electrical signal is a differential signal. It should be understood that, compared with a single-ended signal, the differential signal has a stronger anti-interference capability, can effectively suppress EMI, and has an advantage of accurate timing-based positioning.

In some possible implementations, the slave gateway further includes a power supply, and a supply voltage from the photoelectric composite cable is input to the power supply through the port.

In some possible implementations, the slave gateway further includes an isolation unit, and the isolation unit is separately connected to the sending unit, the receiving unit, the power supply, and the port. The isolation unit is configured to: isolate the supply voltage, to prevent the supply voltage from being transmitted to the control unit through the receiving unit; and isolate the first electrical signal and the second electrical signal, to prevent the first electrical signal and the second electrical signal from being transmitted to the power supply. In this implementation, the isolation unit isolates the supply voltage from an exchanged electrical signal, so that there is no interference between power supply and electrical signal transmission.

In some possible implementations, the isolation unit includes a coupling capacitor module and an isolation inductor module. The coupling capacitor module is configured to isolate the supply voltage, to prevent the supply voltage from being transmitted to the control unit through the receiving unit. The isolation inductor module is configured to isolate the first electrical signal and the second electrical signal, to prevent the first electrical signal and the second electrical signal from being transmitted to the power supply.

In some possible implementations, the first electrical signal carries status information of the slave gateway.

In some possible implementations, the second electrical signal carries topology information between the optical splitter and the slave gateway.

According to a third aspect, an embodiment of this application provides a master gateway. The master gateway includes: a control unit, a sending unit, a receiving unit, and a port, where the port is connected to a cascading port of an optical splitter through a photoelectric composite cable. Specifically, the control unit is configured to generate a first electrical signal. The sending unit is configured to transmit the first electrical signal to the port, to enable the first electrical signal to be transmitted to the optical splitter from the port. The receiving unit is configured to: receive a second electrical signal input from the port, and transmit the second electrical signal to the control unit, where the second electrical signal is from the optical splitter.

In some possible implementations, the first electrical signal is a differential signal, and/or the second electrical signal is a differential signal. It should be understood that, compared with a single-ended signal, the differential signal has a stronger anti-interference capability, can effectively suppress EMI, and has an advantage of accurate timing-based positioning.

In some possible implementations, the master gateway further includes a power supply, the power supply is configured to output a supply voltage, and the supply voltage is transmitted to the optical splitter through the photoelectric composite cable.

In some possible implementations, the master gateway further includes an isolation unit, and the isolation unit is separately connected to the sending unit, the receiving unit, the power supply, and the port. The isolation unit is configured to: isolate the supply voltage, to prevent the supply voltage from being transmitted to the control unit through the receiving unit; and isolate the first electrical signal and the second electrical signal, to prevent the first electrical signal and the second electrical signal from being transmitted to the power supply. In this implementation, the isolation unit isolates the supply voltage from an exchanged electrical signal, so that there is no interference between power supply and electrical signal transmission.

In some possible implementations, the isolation unit includes a coupling capacitor module and an isolation inductor module. The coupling capacitor module is configured to isolate the supply voltage, to prevent the supply voltage from being transmitted to the control unit through the receiving unit. The isolation inductor module is configured to isolate the first electrical signal and the second electrical signal, to prevent the first electrical signal and the second electrical signal from being transmitted to the power supply.

According to a fourth aspect, an embodiment of this application provides an electrical signal transmission method, and the method is applied to an optical splitter. The optical splitter includes: a control unit, a sending unit, a receiving unit, and N first ports, where the N first ports are respectively connected to N slave gateways through a first photoelectric composite cable, and N is an integer greater than 1. The method includes the following steps: The receiving unit receives N channels of first electrical signals respectively input from the N first ports, and transmits the N channels of first electrical signals to the control unit, where the N channels of first electrical signals are respectively from the N slave gateways; the control unit generates a second electrical signal; and the sending unit transmits the second electrical signal to the N first ports, to enable the second electrical signal to be respectively output to the N slave gateways from the N first ports.

In some possible implementations, the first electrical signal is a differential signal, and/or the second electrical signal is a differential signal.

In some possible implementations, the optical splitter further includes a power supply, and the method further includes: The power supply outputs a supply voltage, where the supply voltage is respectively transmitted to the N slave gateways through the first photoelectric composite cable.

In some possible implementations, the optical splitter further includes an isolation unit, the isolation unit is separately connected to the sending unit, the receiving unit, the power supply, and the first port, and the method further includes: The isolation unit isolates the supply voltage, to prevent the supply voltage from being transmitted to the control unit through the receiving unit. The isolation unit isolates the first electrical signal and the second electrical signal, to prevent the first electrical signal and the second electrical signal from being transmitted to the power supply.

In some possible implementations, the isolation unit includes a coupling capacitor module and an isolation inductor module, and the method further includes: The coupling capacitor module isolates the supply voltage, to prevent the supply voltage from being transmitted to the control unit through the receiving unit. The isolation inductor module isolates the first electrical signal and the second electrical signal, to prevent the first electrical signal and the second electrical signal from being transmitted to the power supply.

In some possible implementations, each channel of the first electrical signal carries status information of the slave gateway.

In some possible implementations, the optical splitter further includes N indicator lights, and the method further includes: The control unit respectively controls working modes of the N indicator lights based on the status information of the N slave gateways, where the working mode of the indicator light is used to reflect the status information of the gateway.

In some possible implementations, that the control unit generates a second electrical signal includes: The control unit generates the second electrical signal based on the status information of the N slave gateways, where the second electrical signal carries topology information between the optical splitter and the N slave gateways.

In some possible implementations, the optical splitter further includes a first one-of-N switch and a second one-of-N switch, the sending unit is connected to the first one-of-N switch, the receiving unit is connected to the second one-of-N switch, and the method further includes: The control unit controls on/off of the first one-of-N switch and the second one-of-N switch.

In some possible implementations, the optical splitter further includes a second port, the second port is connected to a master gateway or a first optical splitter through a second photoelectric composite cable, and an electrical signal is transmitted between the optical splitter and the master gateway or the first optical splitter through the second photoelectric composite cable.

In some possible implementations, the optical splitter further includes a third port, the third port is connected to a second optical splitter through a third photoelectric composite cable, and an electrical signal is transmitted between the optical splitter and the second optical splitter through the third photoelectric composite cable.

According to a fifth aspect, an embodiment of this application provides an electrical signal transmission method, and the method is applied to a slave gateway. The slave gateway includes: a control unit, a sending unit, a receiving unit, and a port, where the port is connected to a branch port of an optical splitter through a photoelectric composite cable. The method includes the following steps: The control unit generates a first electrical signal; the sending unit transmits the first electrical signal to the port, to enable the first electrical signal to be transmitted to the optical splitter from the port; and the receiving unit receives a second electrical signal input from the port, and transmits the second electrical signal to the control unit, where the second electrical signal is from the optical splitter.

In some possible implementations, the first electrical signal is a differential signal, and/or the second electrical signal is a differential signal.

In some possible implementations, the slave gateway further includes a power supply, and a supply voltage from the photoelectric composite cable is input to the power supply through the port.

In some possible implementations, the slave gateway further includes an isolation unit, the isolation unit is separately connected to the sending unit, the receiving unit, the power supply, and the port, and the method further includes: The isolation unit isolates the supply voltage, to prevent the supply voltage from being transmitted to the control unit through the receiving unit. The isolation unit isolates the first electrical signal and the second electrical signal, to prevent the first electrical signal and the second electrical signal from being transmitted to the power supply.

In some possible implementations, the isolation unit includes a coupling capacitor module and an isolation inductor module, and the method further includes: The coupling capacitor module isolates the supply voltage, to prevent the supply voltage from being transmitted to the control unit through the receiving unit. The isolation inductor module isolates the first electrical signal and the second electrical signal, to prevent the first electrical signal and the second electrical signal from being transmitted to the power supply.

In some possible implementations, the first electrical signal carries status information of the slave gateway.

In some possible implementations, the second electrical signal carries topology information between the optical splitter and the slave gateway.

According to a sixth aspect, an embodiment of this application provides an electrical signal transmission method, and the method is applied to a master gateway. The master gateway includes: a control unit, a sending unit, a receiving unit, and a port, where the port is connected to a cascading port of an optical splitter through a photoelectric composite cable. The method includes the following steps: The control unit generates a first electrical signal; the sending unit transmits the first electrical signal to the port, to enable the first electrical signal to be transmitted to the optical splitter from the port; and the receiving unit receives a second electrical signal input from the port, and transmits the second electrical signal to the control unit, where the second electrical signal is from the optical splitter.

In some possible implementations, the first electrical signal is a differential signal, and/or the second electrical signal is a differential signal.

In some possible implementations, the master gateway further includes a power supply, and the method further includes: The power supply outputs a supply voltage, where the supply voltage is transmitted to the optical splitter through the photoelectric composite cable.

In some possible implementations, the master gateway further includes an isolation unit, the isolation unit is separately connected to the sending unit, the receiving unit, the power supply, and the port, and the method further includes: The isolation unit isolates the supply voltage, to prevent the supply voltage from being transmitted to the control unit through the receiving unit. The isolation unit isolates the first electrical signal and the second electrical signal, to prevent the first electrical signal and the second electrical signal from being transmitted to the power supply.

In some possible implementations, the isolation unit includes a coupling capacitor module and an isolation inductor module, and the method further includes: The coupling capacitor module isolates the supply voltage, to prevent the supply voltage from being transmitted to the control unit through the receiving unit. The isolation inductor module isolates the first electrical signal and the second electrical signal, to prevent the first electrical signal and the second electrical signal from being transmitted to the power supply.

In embodiments of this application, the optical splitter is connected to the slave gateway through the photoelectric composite cable. In this way, in addition to normal transmission of an optical signal between the optical splitter and the slave gateway through a fiber in the photoelectric composite cable, the optical splitter and the slave gateway may further exchange an electrical signal through a cable in the photoelectric composite cable. In other words, a new channel for exchanging information is additionally provided between the optical splitter and the slave gateway, without affecting normal transmission of the optical signal, so that the optical splitter learns of a current topology structure in real time based on the information exchanged with the slave gateway, to effectively manage and maintain an FTTR network. In addition, this solution may be implemented based on an existing photoelectric composite cable that has been laid, and there is no need to reconstruct the photoelectric composite cable, to reduce laying costs.

### BRIEF DESCRIPTION OF DRAWINGS

FIG. 1 is a schematic diagram of an FTTH system architecture;
FIG. 2 is a schematic diagram of an FTTR system architecture;
FIG. 3 is a schematic diagram of a structure of a photoelectric composite cable according to an embodiment of this application;
FIG. 4 is a schematic diagram of a first network structure including an optical splitter and a slave gateway according to an embodiment of this application;
FIG. 5A and FIG. 5B are a schematic diagram of a second network structure including an optical splitter and a slave gateway according to an embodiment of this application;
FIG. 6A and FIG. 6B are a schematic diagram of a network structure including a master gateway, an optical splitter, and a slave gateway according to an embodiment of this application; and
FIG. 7 is a schematic diagram of an embodiment of an electrical signal transmission method according to this application.

### DESCRIPTION OF EMBODIMENTS

Embodiments of this application provide an optical splitter, a slave gateway, a master gateway, and an electrical signal transmission method. The optical splitter and the slave gateway may further exchange an electrical signal through a cable in a photoelectric composite cable, so that the optical splitter learns of a current topology structure in real time based on information exchanged with the slave gateway, to effectively manage and maintain an FTTR network. It should be noted that in the specification, claims, and the foregoing accompanying drawings of this application, the terms "first" and "second" are intended to distinguish between similar objects but do not limit a specific order or sequence. It should be understood that the foregoing terms may be interchangeable in proper circumstances, so that embodiments described in this application can be implemented in an order different from the content described in this application. In addition, the terms "include" and "have" and any other variant thereof are intended to cover a non-exclusive inclusion. For example, a process, method, system, product, or device that includes a series of steps or units is not necessarily limited to those expressly listed steps or units, but may include other steps or units not expressly listed or inherent to the process, method, product, or device.

A passive optical network (passive optical network, PON) is an implementation technology of an optical access network, and the PON is an optical access technology of point-to-multipoint transmission. A current PON system is mainly used in a fiber to the home (fiber to the home, FTTH) scenario, and each home user has only one ONU.

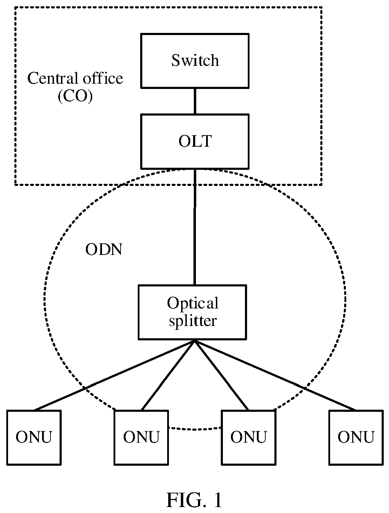

FIG. 1 is a schematic diagram of an FTTH system architecture. An OLT is connected to an upper-layer network side device (for example, a switch or a router), and is connected to one or more lower-layer optical distribution networks (optical distribution networks, ODNs). The ODN includes a passive optical splitter for optical power distribution, a feeder fiber connected between the passive optical splitter and the OLT, and a branch fiber connected between the passive optical splitter and an ONU. During downlink data transmission, the ODN transmits downlink data of the OLT to each ONU through the optical splitter, and the ONU selectively receives downlink data that carries an identifier of the ONU. During uplink data transmission, the ODN combines, into one channel of an optical signal, optical signals sent by N channels of ONUs, and transmits the channel of the optical signal to the OLT. The ONU provides a user side interface for an ODN and is connected to the ODN. If the ONU also provides a user port function, for example, the ONU provides an Ethernet user port or a plain old telephone service (plain old telephone service, POTS) user port, the ONU is referred to as an optical network termination (optical network termination, ONT).

Based on FTTH, to resolve a problem of Wi-Fi coverage of a home network, a fiber may be further extended to a residential room. The ONU is installed inside the room, so that a distance between a user terminal and the ONU is reduced, thereby improving signal quality. This application scenario is referred to as a fiber to the room (Fiber to the Room, FTTR) scenario.

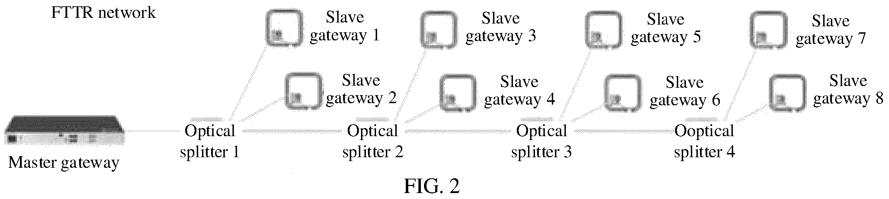

FIG. 2 is a schematic diagram of an FTTR system architecture. An FTTR network and an FTTH network may be considered as two-level PON systems. In a first-level PON system (FTTH), an OLT is deployed in a central office, and an ONU is deployed in an information box of a home. In a second-level PON system (FTTR), a master gateway may be deployed in the information box of the home in place of the ONU in FTTH. The master gateway in an FTTR scenario has a function similar to that of the OLT in an FTTH scenario, and the master gateway may also have a function similar to that of the ONU in the FTTH scenario. That is, the master gateway in FTTR is a device that has functions of both the OLT and the ONU, and may be used as a network device that serves as a connecting link between FTTH and FTTR. A slave gateway in FTTR may be deployed in each room of the home, and is configured to connect to a user terminal. The slave gateway and the ONU in FTTH are essentially a same type of network device. A difference lies in that the ONU in FTTH is generally deployed in the information box, and is usually separated from the user terminal by an access point (access point, AP). However, in FTTR, the slave gateway is installed in each room, and the slave gateway further has a function of the AP, and may directly perform a Wi-Fi connection with the user terminal.

It should be understood that, a plurality of slave gateways may be deployed in FTTR, and each slave gateway is connected to a branch port of a corresponding optical splitter. In addition, a quantity of the optical splitters in FTTR is not limited in this application, and the master gateway is connected to the optical splitters in a cascading manner. The master gateway may manage and configure all the slave gateways in a unified manner. For example, as a control center of a home network, the master gateway may configure all Wi-Fi hotspots in the home as a unified network, optimize a channel to avoid interference, and control roaming and handover of the user terminal, to reduce network handover time and improve user experience.

It should be noted that, in this application, the branch port of the optical splitter is connected to the slave gateway through a photoelectric composite cable. Optionally, the master gateway and each cascaded optical splitter may be connected through an optical cable, or may be connected through the photoelectric composite cable.

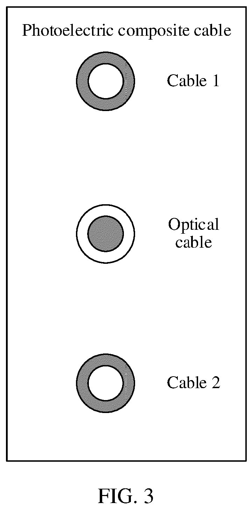

FIG. 3 is a schematic diagram of a structure of a photoelectric composite cable according to an embodiment of this application. As shown in FIG. 3, an optical cable, a cable 1, and a cable 2 are wrapped in an outer sheath of the photoelectric composite cable. The optical cable is used to transmit an optical signal, and the cable 1 and the cable 2 are usually used to supply power. For example, the cable 1 and the cable 2 are respectively connected to a positive electrode and a negative electrode of a power supply. It should be noted that, in this application, an electrical signal may be further transmitted through the cable in the photoelectric composite cable without affecting an existing power supply function of the photoelectric composite cable. That is, the photoelectric composite cable can transmit both the optical signal and the electrical signal. This is equivalent to additionally provide a new channel for exchanging information. The following describes in detail an optical splitter, a master gateway, and a slave gateway in an FTTR system.

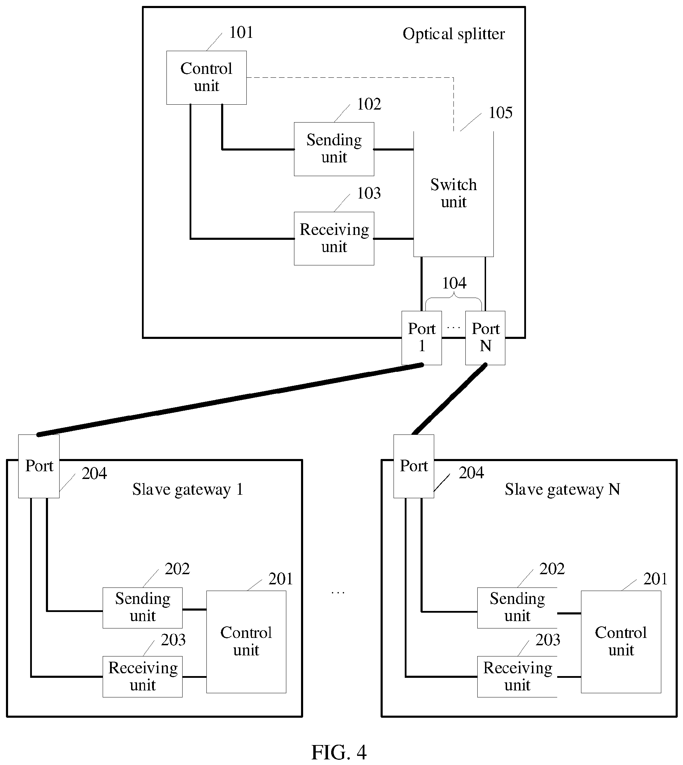

FIG. 4 is a schematic diagram of a first network structure including an optical splitter and a slave gateway according to an embodiment of this application. As shown in FIG. 4, the optical splitter includes a control unit 101, a sending unit 102, a receiving unit 103, and branch ports 104. For example, the branch ports 104 include a port 1 to a port N. It should be understood that each slave gateway has a similar structure. A slave gateway 1 is used as an example. The slave gateway 1 includes a control unit 201, a sending unit 202, a receiving unit 203, and a port 204. The N branch ports 104 of the optical splitter are respectively connected to ports 204 of N slave gateways through a photoelectric composite cable. For example, the port 1 of the optical splitter is connected to the port of the slave gateway 1 through the photoelectric composite cable, ..., and the port N of the optical splitter is connected to a port of a slave gateway N through the photoelectric composite cable.

Specifically, the slave gateway 1 is used as an example. The control unit 201 is configured to generate a first electrical signal, and the sending unit 202 is configured to transmit the first electrical signal to the port 204. The first electrical signal is transmitted to the port 1 of the optical splitter through the photoelectric composite cable, and the receiving unit 103 of the optical splitter is configured to transmit, to the control unit 101, the first electrical signal input from the port 1. The control unit 101 of the optical splitter is further configured to generate a second electrical signal, and the sending unit 102 is configured to transmit the second electrical signal to the port 1. The second electrical signal is transmitted to the port 204 of the slave gateway 1 through the photoelectric composite cable, and the receiving unit 203 of the slave gateway 1 is configured to transmit, to the control unit 201, the second electrical signal input from the port 204.

It should be noted that, as shown in FIG. 3, because two cables are wrapped in the photoelectric composite cable, the first electrical signal and the second electrical signal that are exchanged between the optical splitter and the slave gateway may be transmitted in a form of differential signals. Certainly, in some scenarios, the first electrical signal and the second electrical signal that are exchanged between the optical splitter and the slave gateway may alternatively be transmitted in a form of single-ended signals. This is not specifically limited herein. It should be understood that, compared with the single-ended signal, the differential signal has a stronger anti-interference capability, can effectively suppress electromagnetic interference (Electromagnetic Interference, EMI), and has an advantage of accurate timing-based positioning.

In some possible implementations, the optical splitter further includes a switch unit 105, where the switch unit 105 is configured to control on/off of electrical signal exchanging between the optical splitter and each slave gateway. In an example, the switch unit 105 includes N switches connected to the sending unit 102 and N switches connected to the receiving unit. An on/off state of each switch is controlled by the control unit 101. In another example, the switch unit 105 includes a one-of-N switch connected to the sending unit 102 and a one-of-N switch connected to the receiving unit 103. An on/off state of each one-of-N switch is controlled by the control unit 101. It should be understood that, use of the one-of-N switch may effectively simplify a structure of the switch unit 105, and reduce space occupied by the switch unit 105.

In a possible scenario, the first electrical signal sent by each slave gateway to the optical splitter carries status information of the slave gateway. For example, the status information includes but is not limited to optical power of the slave gateway, a port status of the slave gateway, and a device serial number of the slave gateway. The optical splitter may determine topology information between the optical splitter and each slave gateway based on the first electrical signal reported by each slave gateway, to generate the second electrical signal carrying the topology information.

It should be noted that, in addition to implementing electrical signal exchanging between the optical splitter and the slave gateway, this solution provided in this application may further be compatible with a case in which the optical splitter supplies power to each slave gateway through the photoelectric composite cable. The following further describes this solution.

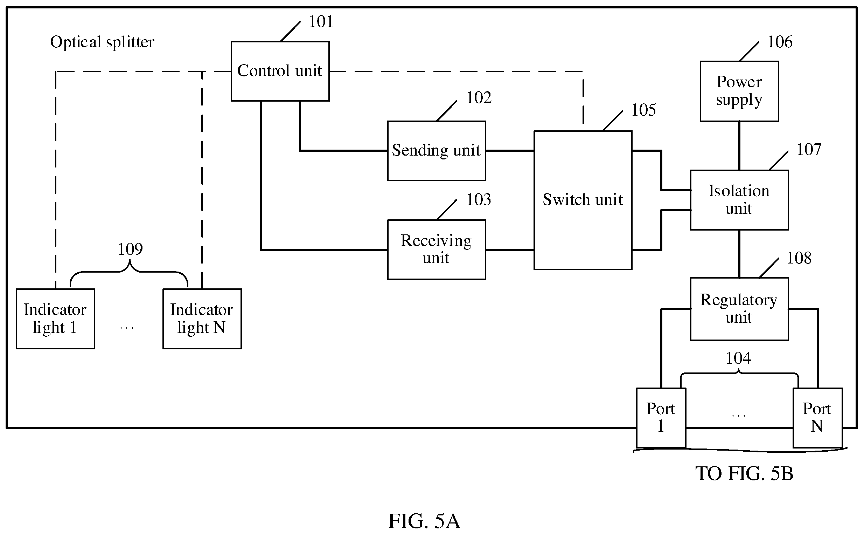

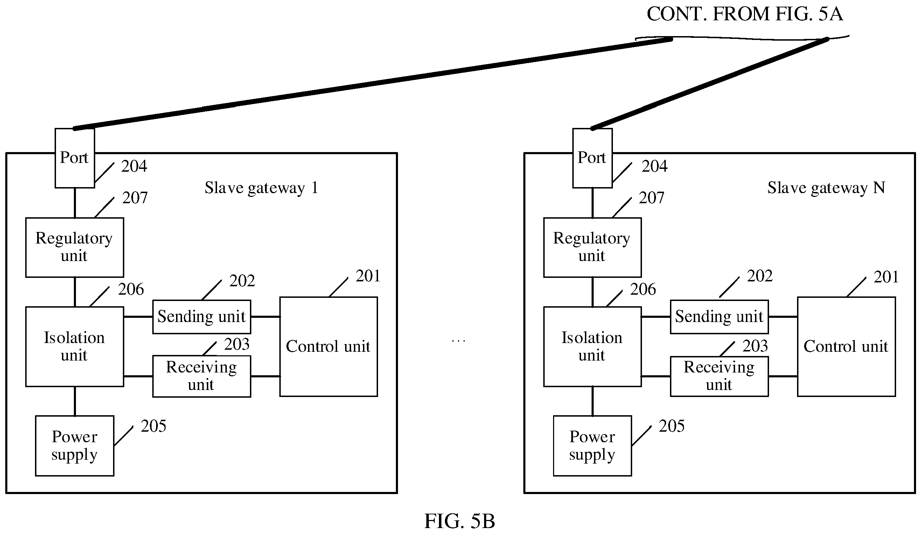

FIG. 5A and FIG. 5B are a schematic diagram of a second network structure including an optical splitter and a slave gateway according to an embodiment of this application. As shown in FIG. 5A and FIG. 5B, the optical splitter further includes a power supply 106, an isolation unit 107, and a regulatory unit 108. A slave gateway 1 is used as an example. The slave gateway 1 further includes a power supply 205, an isolation unit 206, and a regulatory unit 207. Specifically, the power supply 106 of the optical splitter is configured to output a supply voltage, and the supply voltage is output to a corresponding slave gateway from each branch port 104 after passing through the isolation unit 107 and the regulatory unit 108. The slave gateway 1 is used as an example. The supply voltage from the optical splitter is input from a port 204, and is transmitted to the power supply 205 through the regulatory unit 207 and the isolation unit 206. In other words, the optical splitter may obtain power locally, and each slave gateway obtains power from the optical splitter through a photoelectric composite cable.

It should be noted that, both the regulatory unit 108 of the optical splitter and the regulatory unit of the slave gateway can implement safety protection. Both the isolation unit 107 of the optical splitter and the isolation unit 206 of the slave gateway are configured to isolate the supply voltage from an exchanged electrical signal, so that there is no interference between power supply and electrical signal transmission. Specifically, the isolation unit 107 isolates the supply voltage, to prevent the supply voltage from being transmitted to a control unit 101 through a receiving unit 103. The isolation unit 107 isolates a first electrical signal and a second electrical signal, to prevent the first electrical signal and the second electrical signal from being transmitted to the power supply 106. Similarly, the isolation unit 206 isolates the supply voltage, to prevent the supply voltage from being transmitted to a control unit 201 through a receiving unit 203. The isolation unit 206 isolates the first electrical signal and the second electrical signal, to prevent the first electrical signal and the second electrical signal from being transmitted to the power supply 205.

In a possible implementation, the isolation unit 107 includes a coupling capacitor module and an isolation inductor module. The coupling capacitor module is configured to isolate the supply voltage, to prevent the supply voltage from being transmitted to the control unit 101 through the receiving unit 103. The isolation inductor module is configured to isolate the first electrical signal and the second electrical signal, to prevent the first electrical signal and the second electrical signal from being transmitted to the power supply 106. Similarly, the isolation unit 206 includes a coupling capacitor module and an isolation inductor module. The coupling capacitor module is configured to isolate the supply voltage, to prevent the supply voltage from being transmitted to the control unit 201 through the receiving unit 203. The isolation inductor module is configured to isolate the first electrical signal and the second electrical signal, to prevent the first electrical signal and the second electrical signal from being transmitted to the power supply 205.

In a possible implementation, the optical splitter may further include N indicator lights 109, and working modes of the N indicator lights 109 are all controlled by the control unit 101. Each indicator light is configured to reflect a status of a corresponding slave gateway. For example, an indicator light 1 is configured to reflect a status of the slave gateway 1, and an indicator light N is configured to reflect a status of a slave gateway N. It should be understood that, the working mode of the indicator light includes but is not limited to on/off of the indicator light, a luminous color of the indicator light, a flashing status of the indicator light, and the like. This is not specifically limited herein.

It should be noted that, in addition to the foregoing descriptions in which the electrical signal may be exchanged between the optical splitter and the slave gateway, an electrical signal may also be transmitted between the optical splitter and a master gateway through the photoelectric composite cable, and an electrical signal may also be transmitted between cascaded optical splitters through the photoelectric composite cable. The following further describes this.

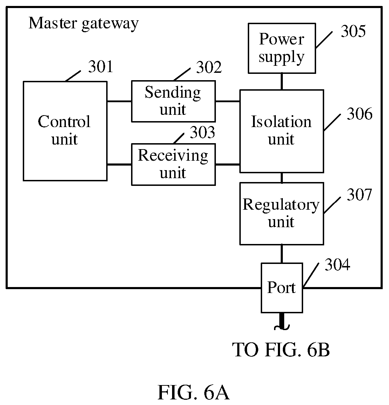

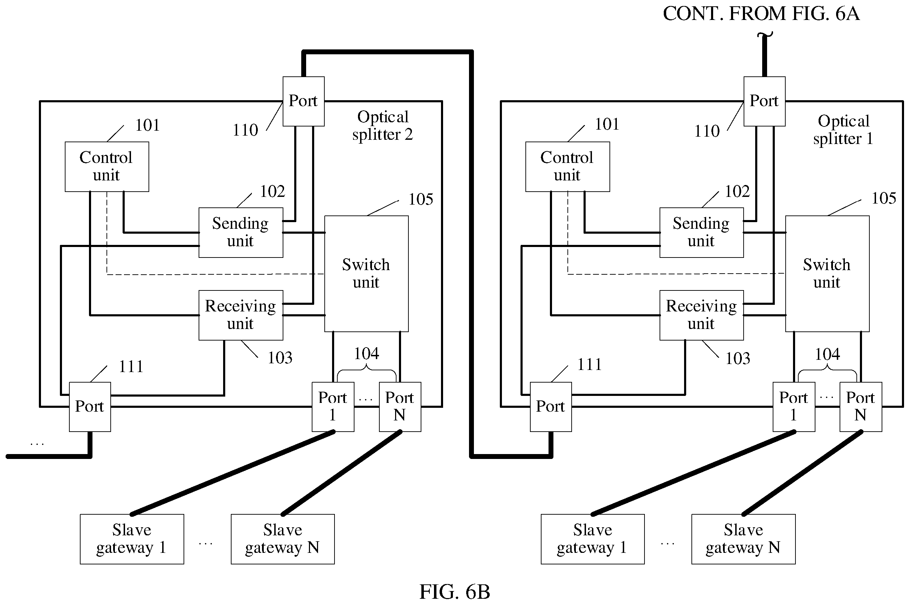

FIG. 6A and FIG. 6B are a schematic diagram of a network structure including a master gateway, an optical splitter, and a slave gateway according to an embodiment of this application. As shown in FIG. 6A and FIG. 6B, the master gateway includes a control unit 301, a sending unit 302, a receiving unit 303, and a port 304. The port 304 of the master gateway is connected to a port 110 of an optical splitter 1 through a photoelectric composite cable, and a port 111 of the optical splitter 1 is connected to a port 110 of an optical splitter 2 through the photoelectric composite cable. That is, the master gateway, the optical splitter 1, and the optical splitter 2 are connected in a cascading manner.

Specifically, the receiving unit 303 of the master gateway is configured to transmit, to the control unit 301, an electrical signal that is from the optical splitter 1 and that is input through the port 304. The sending unit 302 of the master gateway is configured to: transmit, to the port 304, an electrical signal generated by the control unit 301, and output the electrical signal to the optical splitter 1. A receiving unit 103 of the optical splitter 1 is configured to transmit, to a control unit 101, the electrical signal that is from the master gateway and that is input through the port 110. A sending unit 102 of the optical splitter 1 is configured to: transmit, to the port 110, an electrical signal generated by the control unit 101, and output the electrical signal to the master gateway. The receiving unit 103 of the optical splitter is further configured to transmit, to the control unit 101, an electrical signal that is from the optical splitter 2 and that is input through the port 111. The sending unit 102 of the optical splitter 1 is further configured to: transmit, to the port 111, an electrical signal generated by the control unit 101, and output the electrical signal to the optical splitter 2. A receiving unit 103 of the optical splitter 2 is configured to transmit, to a control unit 101, the electrical signal that is from the optical splitter 1 and that is input through the port 110. A sending unit 102 of the optical splitter 2 is configured to: transmit, to the port 110, an electrical signal generated by the control unit 101, and output the electrical signal to the optical splitter 1.

It should be noted that, in this application, information content exchanged between the master gateway and the optical splitter through an electrical signal is not limited, and information content exchanged between cascaded optical splitters through an electrical signal is also not limited. For example, each optical splitter may report, to the master gateway through an electrical signal, status information of a slave gateway connected to the optical splitter, the master gateway generates topology information based on the status information of each slave gateway, and delivers the topology information to each optical splitter, and then each optical splitter delivers the topology information to the corresponding slave gateway. In addition, the electrical signal transmitted between the master gateway and the optical splitter may be in a form of a single-ended signal, or may be in a form of a differential signal. This is not specifically limited herein.

In some possible implementations, in addition to implementing electrical signal exchanging between the master gateway and the optical splitter, this solution provided in this application may further be compatible with a case in which the master gateway supplies power to each optical splitter through the photoelectric composite cable. For example, the master gateway further includes a power supply 305, an isolation unit 306, and a regulatory unit 307. The power supply 305 is configured to output a supply voltage, and the supply voltage is output to a corresponding slave gateway from the port 304 after passing through the isolation unit 306 and the regulatory unit 307. The regulatory unit 307 can implement safety protection. The isolation unit 306 is configured to isolate the supply voltage from the exchanged electrical signal, so that there is no interference between power supply and electrical signal transmission. It should be understood that, in this implementation, for a structure of each optical splitter, refer to the related descriptions of the embodiment shown in FIG. 5A and FIG. 5B. Details are not described herein again.

Specifically, the isolation unit 306 isolates the supply voltage, to prevent the supply voltage from being transmitted to the control unit 301 through the receiving unit 303. The isolation unit 306 isolates the exchanged electrical signal, to prevent the exchanged electrical signal from being transmitted to the power supply 305. In a possible implementation, the isolation unit 306 includes a coupling capacitor module and an isolation inductor module. The coupling capacitor module is configured to isolate the supply voltage, to prevent the supply voltage from being transmitted to the control unit 301 through the receiving unit 303. The isolation inductor module is configured to isolate the exchanged electrical signal, to prevent the exchanged electrical signal from being transmitted to the power supply 305.

Based on the foregoing descriptions, in embodiments of this application, the optical splitter is connected to the slave gateway through the photoelectric composite cable. In this way, in addition to normal transmission of an optical signal between the optical splitter and the slave gateway through a fiber in the photoelectric composite cable, the optical splitter and the slave gateway may further exchange the electrical signal through a cable in the photoelectric composite cable. In other words, a new channel for exchanging information is additionally provided between the optical splitter and the slave gateway, without affecting normal transmission of the optical signal, so that the optical splitter learns of a current topology structure in real time based on the information exchanged with the slave gateway, to effectively manage and maintain an FTTR network. In addition, this solution may be implemented based on an existing photoelectric composite cable that has been laid, and there is no need to reconstruct the photoelectric composite cable, to reduce laying costs.

The following describes an electrical signal transmission method provided in embodiments of this application.

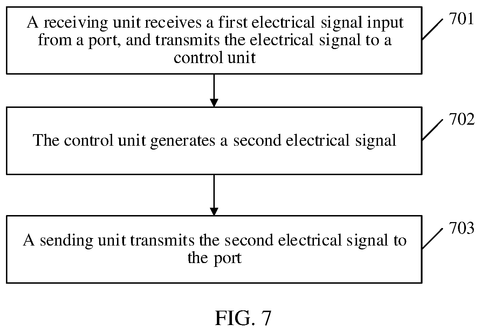

FIG. 7 is a schematic diagram of an embodiment of an electrical signal transmission method according to this application. It should be noted that, the electrical signal transmission method may be implemented based on the master gateway, the optical splitter, or the slave gateway that are described above. For descriptions of the master gateway, the optical splitter, and the slave gateway, refer to the related descriptions of the foregoing embodiments. Details are not described herein again. In this example, the electrical signal transmission method includes following steps.

701: A receiving unit receives a first electrical signal input from a port, and transmits an electrical signal to a control unit.

In a possible implementation, the master gateway may receive, through the receiving unit, a first electrical signal that is from the optical splitter and that is input from the port. In another possible implementation, the optical splitter may receive, through the receiving unit, a first electrical signal that is from the master gateway, the slave gateway, or an optical splitter cascaded with the optical splitter and that is input from the port. In still another possible implementation, the slave gateway may receive, through the receiving unit, a first electrical signal that is from the optical splitter and that is input from the port. It should be understood that, in this application, information carried in an electrical signal exchanged between the master gateway and the optical splitter is not limited, and information carried in an electrical signal exchanged between the optical splitter and the slave gateway is also not limited.

702: The control unit generates a second electrical signal.

In a possible implementation, a control unit of the master gateway generates a second electrical signal based on the received first electrical signal. For example, the first electrical signal carries status information of each slave gateway, and the second electrical signal carries topology information. In another possible implementation, a control unit of the optical splitter generates a second electrical signal based on the received first electrical signal. For example, the first electrical signal carries status information of each slave gateway, and the second electrical signal carries topology information. In still another possible implementation, a control unit of the slave gateway generates a second electrical signal based on status information of the control unit of the slave gateway. It should be understood that, the status information of the slave gateway includes but is not limited to optical power of the slave gateway, a port status of the slave gateway, a device serial number of the slave gateway, and the like.

703: A sending unit transmits the second electrical signal to the port.

In a possible implementation, the second electrical signal sent by the master gateway is transmitted to the optical splitter through the port. In another possible implementation, the second electrical signal sent by the optical splitter is transmitted, through the port, to the slave gateway, the master gateway, or the optical splitter cascaded with the optical splitter. In still another possible implementation, the second electrical signal sent by the slave gateway is transmitted to the optical splitter through the port.

It should be noted that, a supply voltage output by a power supply of the master gateway may supply power to the optical splitter through a photoelectric composite cable. Similarly, a supply voltage output by a power supply of the optical splitter may supply power to the slave gateway through the photoelectric composite cable. In addition, isolation units are further disposed in the master gateway, the optical splitter, and the slave gateway, and the isolation unit isolates the supply voltage from the exchanged electrical signal, so that there is no interference between power supply and electrical signal transmission. For descriptions of the isolation unit, refer to the related descriptions in the foregoing embodiments. Details are not described herein again.

It should be noted that the foregoing embodiments are merely used to describe the technical solutions of this application, but are not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An optical splitter, comprising: a control unit, a sending unit, a receiving unit, and N first ports, wherein the N first ports are respectively connected to N slave gateways through a first photoelectric composite cable, and N is an integer greater than 1;
the receiving unit is configured to: receive N channels of first electrical signals respectively input from the N first ports, and transmit the N channels of first electrical signals to the control unit, wherein the N channels of first electrical signals are respectively from the N slave gateways;
the control unit is configured to generate a second electrical signal; and
the sending unit is configured to transmit the second electrical signal to the N first ports, to enable the second electrical signal to be respectively output to the N slave gateways from the N first ports.

2. The optical splitter according to claim 1, wherein the first electrical signal is a differential signal, and/or the second electrical signal is a differential signal.

3. The optical splitter according to claim 1 or 2, wherein the optical splitter further comprises a power supply, the power supply is configured to output a supply voltage, and the supply voltage is respectively transmitted to the N slave gateways through the first photoelectric composite cable.

4. The optical splitter according to claim 3, wherein the optical splitter further comprises an isolation unit, the isolation unit is separately connected to the sending unit, the receiving unit, the power supply, and the first port, and the isolation unit is configured to:
isolate the supply voltage, to prevent the supply voltage from being transmitted to the control unit through the receiving unit; and
isolate the first electrical signal and the second electrical signal, to prevent the first electrical signal and the second electrical signal from being transmitted to the power supply.

5. The optical splitter according to claim 4, wherein the isolation unit comprises a coupling capacitor module and an isolation inductor module;
the coupling capacitor module is configured to isolate the supply voltage, to prevent the supply voltage from being transmitted to the control unit through the receiving unit; and
the isolation inductor module is configured to isolate the first electrical signal and the second electrical signal, to prevent the first electrical signal and the second electrical signal from being transmitted to the power supply.

6. The optical splitter according to any one of claims 1 to 5, wherein each channel of the first electrical signal carries status information of the slave gateway.

7. The optical splitter according to claim 6, wherein the optical splitter further comprises N indicator lights, and the control unit is further configured to respectively control working modes of the N indicator lights based on the status information of the N slave gateways, wherein the working mode of the indicator light is used to reflect the status information of the gateway.

8. The optical splitter according to claim 6 or 7, wherein the control unit is specifically configured to generate the second electrical signal based on the status information of the N slave gateways, wherein the second electrical signal carries topology information between the optical splitter and the N slave gateways.

9. The optical splitter according to any one of claims 1 to 8, wherein the optical splitter further comprises a first one-of-N switch and a second one-of-N switch, the sending unit is connected to the first one-of-N switch, the receiving unit is connected to the second one-of-N switch, and the control unit is configured to control on/off of the first one-of-N switch and the second one-of-N switch.

10. The optical splitter according to any one of claims 1 to 9, wherein the optical splitter further comprises a second port, the second port is connected to a master gateway or a first optical splitter through a second photoelectric composite cable, and an electrical signal is transmitted between the optical splitter and the master gateway or the first optical splitter through the second photoelectric composite cable.

11. The optical splitter according to any one of claims 1 to 10, wherein the optical splitter further comprises a third port, the third port is connected to a second optical splitter through a third photoelectric composite cable, and an electrical signal is transmitted between the optical splitter and the second optical splitter through the third photoelectric composite cable.

12. A slave gateway, comprising: a control unit, a sending unit, a receiving unit, and a port, wherein the port is connected to a branch port of an optical splitter through a photoelectric composite cable;
the control unit is configured to generate a first electrical signal;
the sending unit is configured to transmit the first electrical signal to the port, to enable the first electrical signal to be transmitted to the optical splitter from the port; and
the receiving unit is configured to: receive a second electrical signal input from the port, and transmit the second electrical signal to the control unit, wherein the second electrical signal is from the optical splitter.

13. The slave gateway according to claim 12, wherein the first electrical signal is a differential signal, and/or the second electrical signal is a differential signal.

14. The slave gateway according to claim 12 or 13, wherein the slave gateway further comprises a power supply, and a supply voltage from the photoelectric composite cable is input to the power supply through the port.

15. The slave gateway according to claim 14, wherein the slave gateway further comprises an isolation unit, the isolation unit is separately connected to the sending unit, the receiving unit, the power supply, and the port, and the isolation unit is configured to:
isolate the supply voltage, to prevent the supply voltage from being transmitted to the control unit through the receiving unit; and
isolate the first electrical signal and the second electrical signal, to prevent the first electrical signal and the second electrical signal from being transmitted to the power supply.

16. The slave gateway according to claim 15, wherein the isolation unit comprises a coupling capacitor module and an isolation inductor module;
the coupling capacitor module is configured to isolate the supply voltage, to prevent the supply voltage from being transmitted to the control unit through the receiving unit; and
the isolation inductor module is configured to isolate the first electrical signal and the second electrical signal, to prevent the first electrical signal and the second electrical signal from being transmitted to the power supply.

17. The slave gateway according to any one of claims 12 to 16, wherein the first electrical signal carries status information of the slave gateway.

18. The slave gateway according to any one of claims 12 to 17, wherein the second electrical signal carries topology information between the optical splitter and the slave gateway.

19. A master gateway, comprising: a control unit, a sending unit, a receiving unit, and a port, wherein the port is connected to a cascading port of an optical splitter through a photoelectric composite cable;
the control unit is configured to generate a first electrical signal;
the sending unit is configured to transmit the first electrical signal to the port, to enable the first electrical signal to be transmitted to the optical splitter from the port; and
the receiving unit is configured to: receive a second electrical signal input from the port, and transmit the second electrical signal to the control unit, wherein the second electrical signal is from the optical splitter.

20. The master gateway according to claim 19, wherein the first electrical signal is a differential signal, and/or the second electrical signal is a differential signal.

21. The master gateway according to claim 19 or 20, wherein the master gateway further comprises a power supply, the power supply is configured to output a supply voltage, and the supply voltage is transmitted to the optical splitter through the photoelectric composite cable.

22. The master gateway according to claim 21, wherein the master gateway further comprises an isolation unit, the isolation unit is separately connected to the sending unit, the receiving unit, the power supply, and the port, and the isolation unit is configured to:
isolate the supply voltage, to prevent the supply voltage from being transmitted to the control unit through the receiving unit; and
isolate the first electrical signal and the second electrical signal, to prevent the first electrical signal and the second electrical signal from being transmitted to the power supply.

23. The master gateway according to claim 22, wherein the isolation unit comprises a coupling capacitor module and an isolation inductor module;
the coupling capacitor module is configured to isolate the supply voltage, to prevent the supply voltage from being transmitted to the control unit through the receiving unit; and
the isolation inductor module is configured to isolate the first electrical signal and the second electrical signal, to prevent the first electrical signal and the second electrical signal from being transmitted to the power supply.

24. An electrical signal transmission method, wherein the method is applied to an optical splitter, and the optical splitter comprises: a control unit, a sending unit, a receiving unit, and N first ports, wherein the N first ports are respectively connected to N slave gateways through a first photoelectric composite cable, and N is an integer greater than 1; and the method comprises:
receiving, by the receiving unit, N channels of first electrical signals respectively input from the N first ports, and transmitting the N channels of first electrical signals to the control unit, wherein the N channels of first electrical signals are respectively from the N slave gateways;
generating, by the control unit, a second electrical signal; and
transmitting, by the sending unit, the second electrical signal to the N first ports, to enable the second electrical signal to be respectively output to the N slave gateways from the N first ports.

25. The method according to claim 24, wherein the first electrical signal is a differential signal, and/or the second electrical signal is a differential signal.

26. The method according to claim 24 or 25, wherein the optical splitter further comprises a power supply, and the method further comprises:
outputting, by the power supply, a supply voltage, wherein the supply voltage is respectively transmitted to the N slave gateways through the first photoelectric composite cable.

27. The method according to claim 26, wherein the optical splitter further comprises an isolation unit, the isolation unit is separately connected to the sending unit, the receiving unit, the power supply, and the first port, and the method further comprises:
isolating, by the isolation unit, the supply voltage, to prevent the supply voltage from being transmitted to the control unit through the receiving unit; and
isolating, by the isolation unit, the first electrical signal and the second electrical signal, to prevent the first electrical signal and the second electrical signal from being transmitted to the power supply.

28. The method according to claim 27, wherein the isolation unit comprises a coupling capacitor module and an isolation inductor module, and the method further comprises:
isolating, by the coupling capacitor module, the supply voltage, to prevent the supply voltage from being transmitted to the control unit through the receiving unit; and
isolating, by the isolation inductor module, the first electrical signal and the second electrical signal, to prevent the first electrical signal and the second electrical signal from being transmitted to the power supply.

29. The method according to any one of claims 24 to 28, wherein each channel of the first electrical signal carries status information of the slave gateway.

30. The method according to claim 29, wherein the optical splitter further comprises N indicator lights, and the method further comprises:
respectively controlling, by the control unit, working modes of the N indicator lights based on the status information of the N slave gateways, wherein the working mode of the indicator light is used to reflect the status information of the gateway.

31. The method according to claim 29 or 30, wherein the generating, by the control unit, a second electrical signal comprises:
generating, by the control unit, the second electrical signal based on the status information of the N slave gateways, wherein the second electrical signal carries topology information between the optical splitter and the N slave gateways.

32. The method according to any one of claims 24 to 31, wherein the optical splitter further comprises a first one-of-N switch and a second one-of-N switch, the sending unit is connected to the first one-of-N switch, the receiving unit is connected to the second one-of-N switch, and the method further comprises:
controlling, by the control unit, on/off of the first one-of-N switch and the second one-of-N switch.

33. The method according to any one of claims 24 to 32, wherein the optical splitter further comprises a second port, the second port is connected to a master gateway or a first optical splitter through a second photoelectric composite cable, and an electrical signal is transmitted between the optical splitter and the master gateway or the first optical splitter through the second photoelectric composite cable.

34. The method according to any one of claims 24 to 33, wherein the optical splitter further comprises a third port, the third port is connected to a second optical splitter through a third photoelectric composite cable, and an electrical signal is transmitted between the optical splitter and the second optical splitter through the third photoelectric composite cable.

35. An electrical signal transmission method, wherein the method is applied to a slave gateway, and the slave gateway comprises: a control unit, a sending unit, a receiving unit, and a port, wherein the port is connected to a branch port of an optical splitter through a photoelectric composite cable; and the method comprises:
generating, by the control unit, a first electrical signal;
transmitting, by the sending unit, the first electrical signal to the port, to enable the first electrical signal to be transmitted to the optical splitter from the port; and
receiving, by the receiving unit, a second electrical signal input from the port, and transmitting the second electrical signal to the control unit, wherein the second electrical signal is from the optical splitter.

36. The method according to claim 35, wherein the first electrical signal is a differential signal, and/or the second electrical signal is a differential signal.

37. The method according to claim 35 or 36, wherein the slave gateway further comprises a power supply, and a supply voltage from the photoelectric composite cable is input to the power supply through the port.

38. The method according to claim 37, wherein the slave gateway further comprises an isolation unit, the isolation unit is separately connected to the sending unit, the receiving unit, the power supply, and the port, and the method further comprises:
isolating, by the isolation unit, the supply voltage, to prevent the supply voltage from being transmitted to the control unit through the receiving unit; and
isolating, by the isolation unit, the first electrical signal and the second electrical signal, to prevent the first electrical signal and the second electrical signal from being transmitted to the power supply.

39. The method according to claim 38, wherein the isolation unit comprises a coupling capacitor module and an isolation inductor module, and the method further comprises:
isolating, by the coupling capacitor module, the supply voltage, to prevent the supply voltage from being transmitted to the control unit through the receiving unit; and
isolating, by the isolation inductor module, the first electrical signal and the second electrical signal, to prevent the first electrical signal and the second electrical signal from being transmitted to the power supply.

40. The method according to any one of claims 35 to 39, wherein the first electrical signal carries status information of the slave gateway.

41. The method according to any one of claims 35 to 40, wherein the second electrical signal carries topology information between the optical splitter and the slave gateway.

42. An electrical signal transmission method, wherein the method is applied to a master gateway, and the master gateway comprises: a control unit, a sending unit, a receiving unit, and a port, wherein the port is connected to a cascading port of an optical splitter through a photoelectric composite cable; and the method comprises:
generating, by the control unit, a first electrical signal;
transmitting, by the sending unit, the first electrical signal to the port, to enable the first electrical signal to be transmitted to the optical splitter from the port; and
receiving, by the receiving unit, a second electrical signal input from the port, and transmitting the second electrical signal to the control unit, wherein the second electrical signal is from the optical splitter.

43. The method according to claim 42, wherein the first electrical signal is a differential signal, and/or the second electrical signal is a differential signal.

44. The method according to claim 42 or 43, wherein the master gateway further comprises a power supply, and the method further comprises:
outputting, by the power supply, a supply voltage, wherein the supply voltage is transmitted to the optical splitter through the photoelectric composite cable.

45. The method according to claim 44, wherein the master gateway further comprises an isolation unit, the isolation unit is separately connected to the sending unit, the receiving unit, the power supply, and the port, and the method further comprises:
isolating, by the isolation unit, the supply voltage, to prevent the supply voltage from being transmitted to the control unit through the receiving unit; and
isolating, by the isolation unit, the first electrical signal and the second electrical signal, to prevent the first electrical signal and the second electrical signal from being transmitted to the power supply.

46. The method according to claim 45, wherein the isolation unit comprises a coupling capacitor module and an isolation inductor module, and the method further comprises:
isolating, by the coupling capacitor module, the supply voltage, to prevent the supply voltage from being transmitted to the control unit through the receiving unit; and
isolating, by the isolation inductor module, the first electrical signal and the second electrical signal, to prevent the first electrical signal and the second electrical signal from being transmitted to the power supply.
